# EUROPÄISCHE PATENTSCHRIFT

(11) **EP 1 714 053 B1**
(45) Veröffentlichungstag und Bekanntmachung des Hinweises auf die Patenterteilung: **25.07.2007**
(21) Anmeldenummer: 04804177.6
(22) Anmeldetag: 22.12.2004
(51) Int. Cl.: F16H 7/08

(54) **UMLENKROLLE FÜR EINEN ZUGMITTELTRIEB**
DEFLECTION ROLLER FOR A TRACTION MECHANISM DRIVE
POULIE DE DEVIATION POUR UN DISPOSITIF D'ENTRAINEMENT DE MECANISME DE TRACTION

(30) Priorität: 12.02.2004 DE 102004006906
(43) Veröffentlichungstag der Anmeldung: 25.10.2006
(73) Patentinhaber: Schaeffler KG, 91074 Herzogenaurach (DE)
(72) Erfinder: STIEF, Hermann, 91448 Emskirchen (DE); RIBEY, Scott, 91074 Herzogenaurach (DE); SCHRÖDER, Christoph, 91074 Herzogenaurach (DE)
(86) Internationale Anmeldenummer: PCT/EP2004/014581
(87) Internationale Veröffentlichungsnummer: WO 2005/083298

(56) Entgegenhaltungen:
- DE-A1- 10 035 488
- DE-A1- 10 036 765
- DE-A1- 10 043 840

## Beschreibung

### Anwendungsgebiet der Erfindung

Die Erfindung betrifft eine Umlenkrolle für einen Zugmitteltrieb, bestehend aus einem Ringkörper, an dessen Mantelfläche ein Zugmittel, insbesondere ein Riemen anliegt, einem aus einem Innenring und einem Außenring bestehenden Wälzlager, wobei der Außenring von einer Aufnahmebohrung des Ringkörpers umschlossen ist, die Umlenkrolle mit Hilfe einer durch eine Aufnahmebohrung des Innenringes und eine Aufnahmebohrung einer Distanzhülse durchgeführten Befestigungsschraube an einer Anschraubfläche fixiert ist, wobei der Abstand zwischen der Anschraubfläche und der Umlenkrolle durch die axiale Ausdehnung der Distanzhülse bestimmt ist, die mit Hilfe einer Transportsicherung an der Umlenkrolle gehalten ist.

### Hintergrund der Erfindung

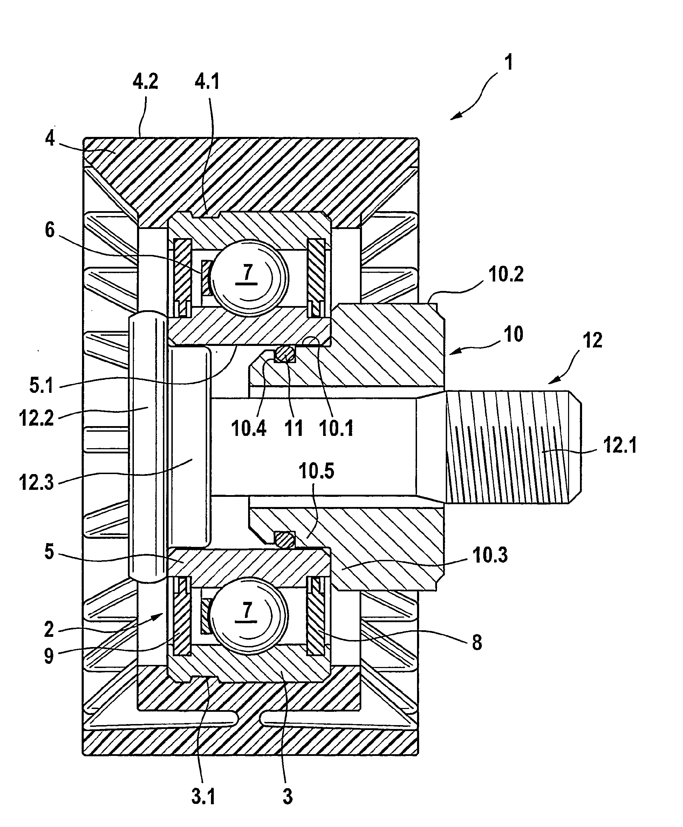

Eine derartige Umlenkrolle ist aus der gattungsgemäßen DE 100 36 765 A1 vorbekannt. Diese besteht gemäß Figur 2 aus einem Ringkörper, an dessen äußerer Mantelfläche ein Zugmittel in Form eines Riemens anliegt. Dieser Ringkörper umschließt mit seiner Aufnahmebohrung den Außenring eines doppelreihigen Rillenkugellagers, das nach außen beidseitig abgedichtet ist. Zur Umlenkrolle gehört weiter ein Distanzelement in Form einer Scheibe, über die der axiale Abstand zwischen Anschraubfläche am Motor und der Mitte des Riemens, die gleichzeitig Mitte des Wälzlagers ist, ausgeglichen wird. Die Umlenkrolle wird mit Hilfe einer Befestigungsschraube an der Anschraubfläche des Motors gehalten, wobei diese den Lagerinnenring und die Distanzhülse durchsetzt. Um ein Abfallen von Befestigungsschraube und Distanzelement von der Umlenkrolle zu verhindern, ist in die Aufnahmebohrung des Lagerinnenringes ein Halteelement eingesetzt, das einerseits die Befestigungsschraube und andererseits das Distanzelement umgreift. Auf diese Weise ist der unverlierbare Zusammenhalt von Umlenkrolle, Distanzelement und Befestigungsschraube über das in den Lagerinnenring eingesetzte Halteelement realisiert.

Nachteilig dabei ist, dass neben dem Distanzelement auch die Befestigungsschraube selbst unverlierbar an der Umlenkrolle gehalten ist. Dies kann bei der automatischen Befestigung der Spannrolle an der Befestigungsfläche hinderlich sein, weil unter Umständen die Befestigungsschraube im Wege steht.

Aus der DE 100 43 840 A1 ist eine weitere gattungsgemäße Umlenkrolle für einen Zugmitteltrieb bekannt geworden. Diese wird über eine Distanzhülse mit Hilfe einer Befestigungsschraube an der Anschraubfläche des Motors fixiert, wobei die Befestigungsschraube von der Aufnahmebohrung des Lagerinnenringes aufgenommen ist und somit diesen und die Distanzhülse durchsetzt. Um eine unverlierbare Baueinheit aus Umlenkrolle, Distanzhülse und Befestigungsschraube zu bilden, ist die Distanzhülse mit radial nach innen gerichteten Verstemmungen versehen, die ein axiales Herauswandern der Befestigungsschraube verhindern. Auch in diesem Falle ist von Nachteil, dass die Befestigungsschraube selbst zur Transportsicherung gehört.

### Zusammenfassung der Erfindung

Ausgehend von den Nachteilen der bekannten technischen Lösungen liegt der Erfindung daher die Aufgabe zugrunde, eine Transportsicherung zwischen Umlenkrolle und Distanzhülse ohne die zugehörige Befestigungsschraube zu realisieren.

Erfindungsgemäß wird diese Aufgabe nach dem kennzeichnenden Teil von Anspruch 1 in Verbindung mit dessen Oberbegriff dadurch gelöst, dass die Distanzhülse mit einem Führungsbund von der Aufnahmebohrung des Innenringes aufgenommen ist, der Führungsbund eine Ausnehmung aufweist, in die ein elastisches Halteelement eingesetzt ist, das mit Vorspannung an der Aufnahmebohrung des Innenringes anliegt.

Der entscheidende Vorteil der erfindungsgemäßen Lösung liegt darin, dass die Transport- bzw. Verliersicherung von Umlenkrolle und zugehöriger Distanzhülse ohne die Befestigungsschraube, die zur Fixierung der Umlenkrolle an der Anschraubfläche erforderlich ist, realisiert ist. Diese wird vom Endverbraucher selbst beigestellt und braucht daher nicht erst aus der Umlenkrolle entfernt werden, falls das die Platzverhältnisse beim Montagevorgang erfordern sollten. Weitere Vorteile liegen darin, dass einerseits ein zusätzliches, die Befestigungsschraube umschließendes Halteelement nicht mehr erforderlich ist, und andererseits durch die nicht erforderliche Verstemmung zwischen Distanzhülse und Befestigungsschraube keine Spezialbefestigungsschrauben verwendet werden müssen. Ein weiterer Vorteil liegt in der großen Toleranzbreite zwischen Distanzhülse und Aufnahmebohrung des Lagerinnenringes. Da der Sitz der Distanzhülse über ihren Führungsbund im Lagerinnenring durch das elastische Halteelement realisiert ist, sind größere Toleranzen zwischen dem Durchmesser des Führungsbundes und dem Durchmesser der Aufnahmebohrung des Innenringes möglich. Auf diese Weise ist es möglich, eine Radialluft zwischen Führungsbund und Innenring von etwa 0,75 mm zu tolerieren. Durch das elastische Halteelement ist auch ein negativer Einfluss auf die Radialluft des Wälzlagers kompensiert. Dieser würde beispielsweise eintreten, wenn die Distanzhülse mit einer Überdeckung in die Aufnahmebohrung des Innenringes gepresst würde.

Weitere vorteilhafte Ausgestaltungen der Erfindung sind in den nachstehenden Unteransprüchen beschrieben.

So geht aus den Ansprüchen 2 und 3 hervor, dass das Halteelement als ein geschlitzter Haltering oder als ein O-Ring aus einem Kunststoff ausgebildet sein soll. Diese lassen sich in besonders einfacher Weise fertigen oder sind auf dem Markt als Zukaufteil in beliebigen Größenverhältnissen preiswert verfügbar. Außerdem ist die Montage kostengünstig, da die Halteelemente in die Ausnehmung in einfacher Weise eingesetzt werden können.

Nach einem weiteren Merkmal der Erfindung gemäß Anspruch 4 soll die Befestigungsschraube im Bereich ihres Schraubenkopfes über einen in der Aufnahmebohrung des Innenringes eingepassten Führungsansatz zentriert sein. Auf diese Weise ist eine vereinfachte Montage der Umlenkrolle an der Anschlagfläche eines Motors möglich.

Nach einem weiteren Merkmal der Erfindung gemäß Anspruch 5 soll die Distanzhülse mit einer Schulter an einer Stirnseite des Innenringes abgestützt sein. Durch diese Ausgestaltung der Distanzhülse wird eine fehlerfreie Übertragung von in axialer Richtung wirkenden Kräften ausgehend von der Befestigungsschraube über den Lagerinnenring, die Distanzhülse und die Anschlagfläche des Motors realisiert.

Aus Anspruch 6 geht hervor, dass die Distanzhülse aus einem Aluminiumwerkstoff gefertigt ist. Dieser trägt aufgrund seines geringeren spezifischen Gewichtes zu einer, wenn auch geringfügigen, Gewichtsersparnis bei.

Schließlich ist nach einem letzten Merkmal der Erfindung gemäß Anspruch 7 vorgesehen, dass das Wälzlager als ein nach beiden Seiten abgedichtetes einreihiges Rillenkugellager ausgebildet ist, dessen Lagerkugeln in einem Käfig geführt sind. Derartige Rillenkugellager sind als Zukaufteile in Standardausführungen in den verschiedensten Größenordnungen kostengünstig erhältlich.

Die Erfindung wird an nachstehendem Ausführungsbeispiel näher beschrieben.

### Kurze Beschreibung der Zeichnung

Die einzige Figur zeigt einen Längsschnitt durch eine erfindungsgemäß ausgebildete Umlenkrolle.

### Ausführliche Beschreibung der Zeichnung

Die in der einzigen Figur gezeigte Umlenkrolle 1 umfasst das als Rillenkugellager ausgebildete Wälzlager 2, dessen Außenring 3 von dem aus einem Kunststoff hergestellten Ringkörper 4 umschlossen ist, wobei der radial nach innen gerichtete Vorsprung 4.1 des Ringkörpers 4 in die zugehörige Ausnehmung 3.1 des Außenringes 3 eingreift. Auf diese Weise ist sichergestellt, dass der Ringkörper 4 nicht vom Außenring 3 in axialer Richtung heruntergleiten kann. An der Mantelfläche 4.2 des Ringkörpers 4 liegt ein nicht dargestelltes Zugmittel, beispielsweise ein Flachriemen an. Zum Wälzlager 2 gehören weiter dessen Innenring 5, die im Käfig 6 geführten Lagerkugeln 7 und die beiden Dichtungen 8, 9, die fest mit dem Außenring 3 verbunden sind.

Zur Umlenkrolle 1 gehört weiter die Distanzhülse 10, welche mit ihrem Führungsbund 10.5 von der Aufnahmebohrung 5.1 des Innenringes 5 aufgenommen ist. Im Führungsbund 10.5 bzw. in dessen Mantelfläche 10.1 ist eine Ausnehmung 10.4 in Form einer umlaufenden Nut vorhanden, in die das elastische Halteelement 11 eingesetzt ist. Zur Distanzhülse 10 gehört weiter deren Schulter 10.3, an der die nicht bezeichnete Stirnseite des Innenringes 5 des Wälzlagers 2 anliegt. Die Distanzhülse 10 weist demnach einen abgestuften Verlauf auf, wobei der Führungsbund 10.5 mit seiner Mantelfläche 10.1 im Längsschnitt gesehen einen geringeren Durchmesser als der übrige Teil der Distanzhülse 10 mit seiner Mantelfläche 10.2 hat.

Schließlich gehört zur kompletten Umlenkrolle 1 auch die Befestigungsschraube 12, deren Schaft 12.1 rechtsseitig mit einem nicht näher bezeichneten Gewinde versehen ist und linksseitig mit dem Schraubenkopf 12.1 verbunden ist. Dieser geht in den Führungsansatz 12.3 über, der von der Aufnahmebohrung 5.1 des Innenringes 5 umschlossen ist, so dass die Befestigungsschraube 12 beim Einführen in das Wälzlager 2 in einfacher Weise zentriert ist.

Das Wesen der Erfindung liegt darin, dass die Umlenkrolle 1 mit der Distanzhülse 10 zu einer unverlierbaren Baueinheit zusammengefasst ist, die ohne zugehörige Befestigungsschraube 12 an den Endverbraucher geliefert wird. Der Zusammenbau erfolgt derart, dass zunächst in die Ausnehmung 10.4 des Führungsbundes 10.5 der Distanzhülse 10 das elastische Halteelement 11 eingesetzt wird. Das Einschieben der Distanzhülse 10 in die Aufnahmebohrung 5.1 des Innenringes 5 in axialer Richtung ist beendet, wenn diese mit ihrer Schulter 10.3 an der rechtsseitigen Stirnfläche des Innenringes 5 anliegt. Die Distanzhülse 10 ist im Wälzlager 2 durch das Auffedern des Halteelementes 11 sicher gehalten, wobei der Durchmesser des Führungsbundes 10.5 geringfügig kleiner als der Durchmesser der Aufnahmebohrung 5.1 des Innenringes ist. Auf diese Weise kann der Innenring 5 nicht aufgeweitet werden, d. h., die Lagerluft des Wälzlagers 2 bleibt unbeeinflusst. Das Befestigen der Umlenkrolle 1 einschließlich der an ihr gehaltenen Distanzhülse 10 an der nicht dargestellten Anschraubfläche des Motors erfolgt derart, dass die Befestigungsschraube 12 in das Wälzlager 2 eingeführt wird, bis der Schraubenkopf 12.2 an der linksseitigen Stirnfläche des Lagerinnenringes 5 anliegt. Danach erfolgt durch Einschrauben des Gewindes des Schaftes 12.1 in die nicht gezeigte Aufnahmebohrung der Anschraubfläche ein Anpressen der Umlenkrolle 1 in axialer Richtung, wobei die Kraftübertragung vom Schraubenkopf 12.2 über den Lagerinnenring 5, die Schulter 10.3 bis hin zur Anschraubfläche am Motor realisiert ist.

### Bezugszeichen

- 1: Umlenkrolle
- 2: Wälzlager
- 3: Außenring
- 3.1: Ausnehmung
- 4: Ringkörper
- 4.1: Vorsprung
- 4.2: Mantelfläche
- 5: Innenring
- 5.1: Aufnahmebohrung
- 6: Käfig
- 7: Lagerkugel
- 8: Dichtung
- 9: Dichtung
- 10: Distanzhülse
- 10.1: Mantelfläche
- 10.2: Mantelfläche
- 10.3: Schulter
- 10.4: Ausnehmung
- 10.5: Führungsbund
- 11: Halteelement
- 12: Befestigungsschraube
- 12.1: Schaft
- 12.2: Kopf
- 12.3: Führungsansatz

## Patentansprüche

1. Umlenkrolle (1) für einen Zugmitteltrieb, bestehend aus einem Ringkörper (4), an dessen Mantelfläche (4.2) ein Zugmittel, insbesondere ein Riemen anliegt, einem aus einem Innenring (5) und einem Außenring (3) bestehenden Wälzlager (2), wobei der Außenring (3) von einer Aufnahmebohrung des Ringkörpers (4) umschlossen ist, die Umlenkrolle (1) mit Hilfe einer durch eine Aufnahmebohrung des Innenringes (5) und eine Aufnahmebohrung einer Distanzhülse (10) durchgeführten Befestigungsschraube (12) an einer Anschraubfläche fixiert ist, wobei der Abstand zwischen der Anschraubfläche und der Umlenkrolle (1) durch die axiale Ausdehnung der Distanzhülse (10) bestimmt ist, die mit Hilfe einer Transportsicherung an der Umlenkrolle (1) gehalten ist, **dadurch gekennzeichnet, dass** die Distanzhülse (10) mit einem Führungsbund (10.5) von der Aufnahmebohrung (5.1) des Innenringes (5) aufgenommen ist, der Führungsbund (10.5) eine Ausnehmung (10.4) aufweist, in die ein elastisches Halteelement (11) eingesetzt ist, das mit Vorspannung an der Aufnahmebohrung (5.1) des Innenringes (5) anliegt.

2. Umlenkrolle (1) nach Anspruch 1, **dadurch gekennzeichnet, dass** das Halteelement (11) als ein geschlitzter Haltering ausgebildet ist.

3. Umlenkrolle (1) nach Anspruch 1, **dadurch gekennzeichnet, dass** das Halteelement (11) als ein O-Ring aus einem Kunststoff ausgebildet ist.

4. Umlenkrolle (1) nach Anspruch 1, **dadurch gekennzeichnet, dass** die Befestigungsschraube (12) im Bereich ihres Schraubenkopfes (12.2) über einen in der Aufnahmebohrung (5.1) des Innenringes (5) eingepassten Führungsansatz (12.3) zentriert ist.

5. Umlenkrolle (1) nach Anspruch 1, **dadurch gekennzeichnet, dass** die Distanzhülse (10) mit einer Schulter (10.3) an einer Stirnseite des Innenringes (5) abgestützt ist.

6. Umlenkrolle (1) nach Anspruch 1, **dadurch gekennzeichnet, dass** die Distanzhülse (10) aus einem Aluminiumwerkstoff gefertigt ist.

7. Umlenkrolle (1) nach Anspruch 1, **dadurch gekennzeichnet, dass** das Wälzlager (2) als ein nach beiden Seiten abgedichtetes einreihiges Rillenkugellager ausgebildet ist, dessen Lagerkugeln (7) in einem Käfig (6) geführt sind.

## Claims

1. Deflecting roller (1) for a traction mechanism drive, composed of an annular body (4), against the lateral surface (4.2) of which a traction mechanism, in particular a belt, bears, having a rolling bearing (2) which is composed of an inner ring (5) and an outer ring (3), wherein the outer ring (3) is enclosed by a holding bore of the annular body (4), and the deflecting roller (1) is fixed to a screw-on surface by means of a fastening screw (12) which extends through a holding bore of the inner ring (5) and a holding bore of a spacer sleeve (10), wherein the distance between the screw-on surface and the deflecting roller (1) is determined by the axial extent of the spacer sleeve (10) which is held against the deflecting roller (1) by means of a transport securing means, **characterized in that** a guide collar (10.5) of the spacer sleeve (10) is held by the holding bore (5.1) of the inner ring (5), and the guide collar (10.5) has a recess (10.4) in which an elastic holding element (11) is inserted, said elastic holding element (11) bearing against the holding bore (5.1) of the inner ring (5) under preload.

2. Deflecting roller (1) according to Claim 1, **characterized in that** the holding element (11) is formed as a slotted holding ring.

3. Deflecting roller (1) according to Claim 1,
**characterized in that** the holding element (11) is formed as a plastic O-ring.

4. Deflecting roller (1) according to Claim 1,
**characterized in that**, in the region of its screw head (12.2), the fastening screw (12) is centered by means of a guide step (12.3) which is fitted into the holding bore (5.1) of the inner ring (5).

5. Deflecting roller (1) according to Claim 1,
**characterized in that** a shoulder (10.3) of the spacer sleeve (10) is supported against an end side of the inner ring (5).

6. Deflecting roller (1) according to Claim 1,
**characterized in that** the spacer sleeve (10) is produced from an aluminum material.

7. Deflecting roller (1) according to Claim 1,
**characterized in that** the rolling bearing (2) is formed as a single-row deep groove ball bearing which is sealed off at both sides and whose ball bearings (7) are guided in a cage (6).

## Revendications

1. Poulie de déviation (1) pour un dispositif d'entraînement de mécanisme de traction, constituée d'un corps annulaire (4) sur la surface extérieure (4.2) duquel s'applique un mécanisme de traction, en particulier une courroie, et d'un roulement (2) constitué d'une bague intérieure (5) et d'une bague extérieure (3), sachant que la bague extérieure (3) est entourée par un perçage récepteur du corps annulaire (4), et que la poulie de déviation (1) est fixée sur une surface de vissage à l'aide d'une vis de fixation (12) traversant un perçage récepteur de la bague intérieure (5) et un perçage récepteur d'une douille d'écartement (10), sachant que la distance entre la surface de vissage et la poulie de déviation (1) est déterminée par l'étendue axiale de la douille d'écartement (10), qui est maintenue sur la poulie de déviation (1) à l'aide d'un blocage pour le transport, **caractérisée en ce que** la douille d'écartement (10) est reçue par un collet de guidage (10.5) par le perçage récepteur (5.1) de la bague intérieure (5), et le collet de guidage (10.5) présente un évidement (10.4) dans lequel est inséré un élément de retenue élastique (11) qui s'applique avec précontrainte contre le perçage récepteur (5.1) de la bague intérieure (5).

2. Poulie de déviation (1) selon la revendication 1, **caractérisée en ce que** l'élément de retenue (11) est réalisé sous la forme d'une bague fendue de retenue.

3. Poulie de déviation (1) selon la revendication 1, **caractérisée en ce que** l'élément de retenue (11) est réalisé sous la forme d'un anneau torique en matière plastique.

4. Poulie de déviation (1) selon la revendication 1, **caractérisée en ce que** la vis de fixation (12) est, dans la région de sa tête de vis (12.2), centrée au moyen d'un appendice de guidage (12.3) encastré dans le perçage récepteur (5.1) de la bague intérieure (5).

5. Poulie de déviation (1) selon la revendication 1, **caractérisée en ce que** la douille d'écartement (10) s'appuie par un épaulement (10.3) contre un côté frontal de la bague intérieure (5).

6. Poulie de déviation (1) selon la revendication 1, **caractérisée en ce que** la douille d'écartement (10) est fabriquée en un matériau à base d'aluminium.

7. Poulie de déviation (1) selon la revendication 1, **caractérisée en ce que** le roulement (2) est réalisé sous la forme d'un roulement rainuré à simple rangée de billes, étanché des deux côtés, dont les billes de roulement (7) sont guidées dans une cage (6).
